# FASCICULE DE BREVET EUROPEEN

(11) **EP 2 618 772 B1**
(45) Date de publication et mention de la délivrance du brevet: **26.11.2014**
(21) Numéro de dépôt: 11757884.9
(22) Date de dépôt: 20.09.2011
(51) Int. Cl.: A61C 5/02

(54) **INSTRUMENT ENDODONTIQUE DONT LA PARTIE ACTIVE PRÉSENTE UNE FENTE FORMANT UN PASSAGE POUR UN FLUIDE**
ENDODONTISCHES INSTRUMENT, DESSEN ARBEITSABSCHNITT EINEN SPALT AUFWEIST, DER EINEN DURCHGANG FÜR EINE FLÜSSIGKEIT BILDET
ENDODONTIC INSTRUMENT WHOSE WORKING PORTION HAS A SLIT FORMING A PASSAGE FOR A FLUID

(30) Priorité: 21.09.2010 FR 1003743
(43) Date de publication de la demande: 31.07.2013
(73) Titulaire: Neolix, 53001 Laval (FR)
(72) Inventeur: PERNOT, Jacques, F-25870 Vieilley (FR); EUVRARD, Hubert, F-25000 Besançon (FR); COLON, Pierre, F-94100 Saint-Maur-des-Fossés (FR); VULCAIN, Jean-Marie, F-35500 Vitre (FR)
(74) Mandataire: Gicquel, Frédéric
(86) Numéro de dépôt international: PCT/EP2011/066338
(87) Numéro de publication internationale: WO 2012/038435

(56) Documents cités:
- EP-A2- 1 110 513
- WO-A2-2005/122943
- DE-A1-102006 007 316
- US-A1- 2006 127 843

## Description

Le domaine de l'invention est celui de la conception et de la fabrication d'instruments pour pratiquer les soins dentaires. Plus précisément, l'invention concerne les instruments endodontiques, utilisés pour travailler un canal dans une racine de dent (ou canal radiculaire).

Lorsqu'une dent est affectée par une carie profonde, il est parfois nécessaire de dévitaliser la dent. Pour ce faire, il faut retirer de la dent et de la racine de la dent des tissus infectés, et mettre en forme un canal destiné à être obturé par une matière constituant de la Gutta ou autres pâtes d'obturation canalaire.

Pour réaliser ces opérations, on utilise des instruments endodontiques qui s'apparentent à des forets de petits diamètres, et qui permettent d'aléser et/ou découper la dentine de la racine de la dent pour mettre en forme le canal destiné à recevoir de la Gutta ou autres pâtes d'obturation canalaire.

Ce traitement est donc réalisé de manière mécanisée et les instruments endodontiques sont, lors de leur conception, prévus pour présenter une dureté suffisante pour traverser la dentine qui est un matériau mi-dur, tout en présentant un certain degré de souplesse pour pouvoir prendre la forme interne de la racine de la dent. A cette fin, il est proposé depuis plusieurs années des instruments endodontiques réalisés en un alliage de nickel et de titane, en lieu et place des instruments réalisés à partir des fils d'acier.

De façon générale, les instruments endodontiques actuels sont fabriqués à partir d'une tige cylindrique sur laquelle une ou plusieurs découpes hélicoïdales sont taillées, traditionnellement par un procédé de meulage. Les surfaces de découpe génèrent à leur intersection une arête de découpe.

Avec des moyens classiques de fraisage ou de meulage, les découpes réalisées résultent de la conjugaison de mouvements simultanés de la rotation et de l'avance du fil (pièce à usiner) devant la meule ou la fraise. Les instruments ainsi usinés présentent dans leur section perpendiculaire à l'axe du fil une géométrie connue prédéterminée par le cycle d'usinage (cercle, carré, polygone...). Les centres de toutes ces sections transversales définissent ensemble l'âme porteuse de l'arête de découpe le long de la portion de découpe de l'instrument. Il résulte de l'utilisation des moyens d'usinage classique (fraisage ou meulage) que cette âme porteuse s'étend de façon rectiligne et de façon confondue avec l'axe du fil constituant la pièce à usiner initiale.

Les instruments actuels nécessitent une grande vigilance et une dextérité précise de la part du praticien. En effet, avec les instruments endodontiques connus, deux phénomènes opposés peuvent survenir :
- soit l'arête de l'instrument endodontique glisse sur la matière de la dentine ;
- soit l'arête de l'instrument endodontique s'engage trop rapidement dans la matière de la dentine, ce qui conduit à un phénomène désigné par le terme de « survissage », à l'issue duquel l'instrument se coince dans la matière.

Dans les deux cas, l'usinage du canal ne s'opère pas correctement, voire ne se réalise pas du tout.

Il est à noter que dans le cas où l'instrument endodontique se coince dans la matière, il est fréquent que celui-ci vienne à casser. Or, la casse d'instrument endodontique à l'intérieur du canal se traduit par un surcoût d'exploitation important pour le praticien et un risque pour la santé du patient.

Par ailleurs, il est classique de devoir utiliser un fluide pendant l'alésage d'un canal, ce fluide pouvant être un liquide lubrifiant ou une solution antiseptique.

Toutefois, les instruments actuels limitent considérablement l'effet de ces fluides. En effet, lors de l'alésage d'un canal dentaire, le diamètre du canal est celui de l'instrument utilisé et, par conséquent, l'espace entre la paroi du canal et l'instrument en rotation ne permet pas l'écoulement d'un fluide. Dans certains cas, la forme des goujures de la partie active de l'instrument tend même à chasser le fluide du canal.

En tout état de cause, l'effet du fluide s'avère en pratique très limité.

De ce fait, il est nécessaire pour le praticien de réaliser séparément et de manière intercalée les opérations d'alésage et d'irrigation du canal, ce qui ralentit le travail.

US 2006 / 127 843 A1 décrit un instrument endodontique, dont la partie active est constituée d'un ruban enveloppé de façon hélicoïdale autour d'une tige centrale.

EP 1 110 513 A2 décrit un instrument endodontique, dont la partie active est constituée de brins souples.

L'invention a notamment pour objectif de pallier les inconvénients de l'art antérieur. Plus précisément, l'invention a pour objectif de proposer un instrument endodontique qui permette d'augmenter notablement l'écoulement d'un fluide dans le canal dentaire dans lequel l'instrument évolue afin de pouvoir réaliser simultanément les opérations d'alésage et d'irrigation du canal.

L'invention a également pour objectif de fournir un tel instrument endodontique qui soit plus efficace que ceux de l'art antérieur, et qui soit plus simple à utiliser pour le praticien.

Ces objectifs, ainsi que d'autres qui apparaîtront par la suite, sont atteints grâce à l'invention qui a pour objet un instrument endodontique utilisé pour travailler un canal dans une dent, présentant une base à partir de laquelle s'étend longitudinalement une partie active de travail du canal, caractérisé en ce que ladite partie active présente au moins une fente traversante par rapport à la section de l'instrument, s'étendant longitudinalement, formant passage de fluide.

Un tel passage permet l'écoulement d'un fluide sur toute ou partie de la hauteur de l'instrument endodontique, que ce soit dans un sens entrant dans le canal (influx) ou sortant du canal (efflux). Un instrument endodontique selon l'invention peut donc permettre plus efficacement que les instruments de l'art antérieur l'irrigation des canaux radiculaires.

Selon une application avantageuse, au moins une goujure s'étend de la base entre deux arêtes de découpe, ladite goujure s'étendant longitudinalement le long de la partie active.

Toutefois, on note que l'invention n'est pas exclusivement destinée à la réalisation d'un canal. En effet, il est imaginable qu'un instrument utilisant le principe de l'invention soit conçu et exploité pour le remplissage d'un canal par une patte d'obturation (Gutta Percha). En effet, une telle pâte peut être chargée à l'intérieur de l'instrument qui va exercer une poussée de la pâte dans le canal radiculaire, le surplus de pâte remontant par l'extérieur de l'instrument.

Par ailleurs, dans certains modes de réalisation, dont quelques uns sont décrits plus en détails par la suite, la réalisation de la ou des fentes peut être telle qu'elle conduit à l'obtention d'un instrument endodontique susceptible de variations volumétriques dans sa partie active.

La partie active peut être réalisée à partir d'une seule pièce.

Selon une première approche de l'invention, ladite fente est au moins partiellement hélicoïdale.

Ainsi, le flux d'irrigation de fluide est ordonné conjointement par le sens de l'hélice interne (celle de la fente) ou externe (celle des goujures) et par le sens de rotation de l'instrument.

De plus, une fente au moins partiellement hélicoïdale permet de véhiculer activement le fluide, que ce soit dans le sens entrant ou sortant, en fonction de l'orientation de l'hélice (à gauche ou à droite).

En outre, le pas de l'hélice influe sur la pression interne et redonne un flux dynamique au fluide. Les dimensions des fentes au moins partiellement hélicoïdales caractérisent en partie le débit du fluide.

Selon une autre approche de l'invention, ladite fente présente une forme appartenant au groupe suivant :
- sinusoïdal ;
- rectiligne ;
- oblique ;
- courbe ;
- gauche, notamment en L, en S, en T, en U, en V, en W, en Y, en Z.

Selon un autre mode de réalisation particulier, ladite fente présente une ouverture axiale.

On note que l'ouverture axiale peut être placée à toute hauteur de l'instrument. Cette ouverture peut être orientée vers la pointe ou vers la base de l'instrument, ou vers ni l'un ni l'autre (c'est le cas par exemple lorsque une portion de fente est perpendiculaire à l'axe de l'instrument).

En outre, i 1 est à noter que l'ouverture de la fente n'est pas nécessairement située à l'extrémité de la fente. L'ouverture peut donc être située à une hauteur quelconque entre les deux extrémités de la fente (par exemple lorsqu'il s'agit d'une fente en T, en Y..).

Bien entendu, l'ouverture de la fente peut également être située à l'extrémité de la fente (sur la pointe ou sur la base).

Il est également envisageable que les fentes ne présentent, dans le sens longitudinal, aucune ouverture.

Selon un mode de réalisation particulier, dans lequel la base présente un axe de rotation, ladite fente s'étend longitudinalement de façon centrée sur ledit axe de rotation. Toutefois, selon un autre mode de réalisation envisageable, ladite fente s'étend longitudinalement de façon décentrée par rapport audit axe de rotation de la base.

Selon une caractéristique avantageuse, ladite base présente également au moins une fente communiquant avec la fente de la partie active.

De cette façon, la ou les fentes aménagées sur le manche peuvent permettre de connecter le système d'irrigation de l'instrument endodontique avec un dispositif externe, par exemple pour amener un fluide d'un réservoir extérieur vers l'intérieur de l'instrument, et donc, par la suite, vers le canal radiculaire en cours de traitement.

Selon un mode de réalisation préférentiel, ladite partie active présente une pluralité de fentes s'étendant longitudinalement, ladite partie active présentant une pluralité de bras délimitant entre eux ladite pluralité de fentes.

Dans ce cas, lesdits bras sont préférentiellement chacun portés par une âme porteuse s'étendant selon une trajectoire au moins partiellement hélicoïdale.

Un tel instrument, avec sa pluralité de bras portés par une âme porteuse hélicoïdale, est susceptible de variations volumétriques.

En effet, les bras sont susceptibles de se rapprocher, ou de s'éloigner, radialement l'un de l'autre ou l'un par rapport à l'autre. De plus, chaque extrémité des bras peut être aménagée pour donner un pouvoir de coupe frontale (coupe en bout) comme cela va être expliqué plus en détails par la suite.

Il résulte de cette aptitude à la variation volumétrique un instrument selon ce mode de réalisation qui procure notamment les avantages suivants :
- il évite les phénomènes de coincement, et permet le désengagement naturel de l'outil par une rétraction radiale en cas de forte contrainte sur les bras ;
- la variation relative de l'instrument améliore l'évacuation des débris dentinaires et augmente l'efficacité du fluide irrigant ;
- l'effet de l'instrument s'apparente plus à un " grattage " ou à un fraisage, en comparaison de l'action des instruments endodontiques classiques qui s'apparentent à une simple découpe ;
- l'outil s'adapte à la morphologie du canal, variable et souvent complexe (ovoïde, dissymétrique, irrégulière, avec rétrécissement ou élargissement, courbure...) ; ainsi, la zone de contact est toujours maximale entre la ou les arêtes de découpe de l'instrument et la paroi du canal grâce à un ajustement permanent naturel de l'enveloppe dessinée par l'instrument en rotation sous l'effet des contraintes qui s'exercent sur l'instrument ;
- l'outil effectue un curetage plus sélectif des tissus nécrosés, plus mous, grâce à une contrainte réduite opposée à l'instrument en comparaison des tissus sains, plus durs, ce qui préserve de façon optimisée la forme du canal traité ;
- la présence de plusieurs hélices (celles des bras et celles de la ou des fentes), dans des directions identiques ou opposées, dans le sens de la rotation de l'instrument ou dans le sens opposé, permet d'agir sur la circulation des fluides, dans un sens entrant ou sortant (alésage, évacuation des débris, irrigation, compactage...).

Selon une solution avantageuse, lesdits bras délimitent un évidement axial.

Dans ce cas, ledit évidement axial délimité par lesdits bras communique préférentiellement avec un évidement axial ménagé dans ladite base.

Selon une caractéristique particulière, lesdits bras présentent des longueurs différentes.

Dans ce cas, l'un desdits bras est avantageusement un bras central de longueur supérieure à celle des autres bras.

Un tel bras central peut avoir la fonction de " témoin " ou en d'autres termes de "pilote " de l'instrument.

Selon une autre caractéristique particulière, lesdits bras présentent chacun une extrémité dentelée, par exemple pour leur conférer un pouvoir de coupe frontale.

De telles extrémités forment une sorte de griffe, susceptible d'être utilisée par exemple pour enserrer, par l'intermédiaire de l'instrument, un élément indésirable (par exemple un fragment d'instrument fracturé dans un canal radiculaire).

D'autres caractéristiques et avantages de l'invention apparaîtront plus clairement à la lecture de la description suivante de différents modes et variantes de réalisation de l'invention, donnés à titre de simples exemples illustratifs et non limitatifs, et des dessins annexés parmi lesquels :
- les figures 1 à 4 sont des vues d'une ébauche d'un instrument endodontique selon un premier mode de réalisation de l'invention, respectivement vu de côté, vu en perspective et vu selon deux coupes transversales ;
- les figures 5 à 8 sont des vues d'une ébauche d'un instrument endodontique selon un deuxième mode de réalisation de l'invention, respectivement vu de côté, vu en perspective et vu selon deux coupes transversales ;
- la figure 9 est une illustration schématique de la forme intérieure d'un instrument endodontique obtenue à partir d'une ébauche telle que celle illustrée par la figure 5, pendant la rotation de l'instrument ;
- les figures 10 à 13 sont des vues d'un instrument endodontique selon un troisième mode de réalisation de l'invention, respectivement vu de côté, vu en coupe longitudinale, selon une vue de détails et vue en perspective ;
- la figure 14 est une vue de l'instrument endodontique illustré par la figure 10, associé à un manche mécanisé ;
- la figure 15 est une vue de l'instrument endodontique illustré par la figure 10, associé à un autre type de manche mécanisé ;
- les figures 16 et 17 sont chacune une vue en coupe transversale de l'instrument endodontique illustré par la figure 15 ;
- la figure 18 est une vue de côté d'un instrument endodontique selon un quatrième mode de réalisation de l'invention ;
- les figures 19 et 20 sont des vues d'un instrument endodontique selon un cinquième mode de réalisation de l'invention, respectivement vu de côté et vu en perspective ;
- les figures 21 à 24 sont des vues d'un instrument endodontique selon un sixième mode de réalisation de l'invention, respectivement vu de côté et vu selon trois coupes transversales ;
- la figure 25 est une vue de l'instrument illustré par la figure 21, sous contrainte radiale ;
- la figure 26 est une vue en perspective d'une variante de réalisation de l'instrument endodontique illustré par la figure 21 ;
- les figures 27 à 32 sont des vues d'une autre variante de réalisation de l'instrument endodontique, illustré par la figure 21;
- la figure 33 est une vue d'une autre variante de l'instrument endodontique, la figure 34 étant une vue de l'instrument illustré par la figure 33, selon un exemple d'utilisation ;
- la figure 35 est une vue d'une variante de réalisation de l'instrument illustré par la figure 27 ;
- la figure 36 est une vue d'une autre variante de réalisation d'un instrument selon l'invention.

Tel qu'indiqué précédemment, le principe de l'invention réside dans le fait de proposer un instrument endodontique dont la partie active présente une fente longitudinale destinée à permettre la circulation d'un fluide.

Selon un mode de réalisation particulier de l'invention, l'instrument endodontique est susceptible de variations volumétriques.

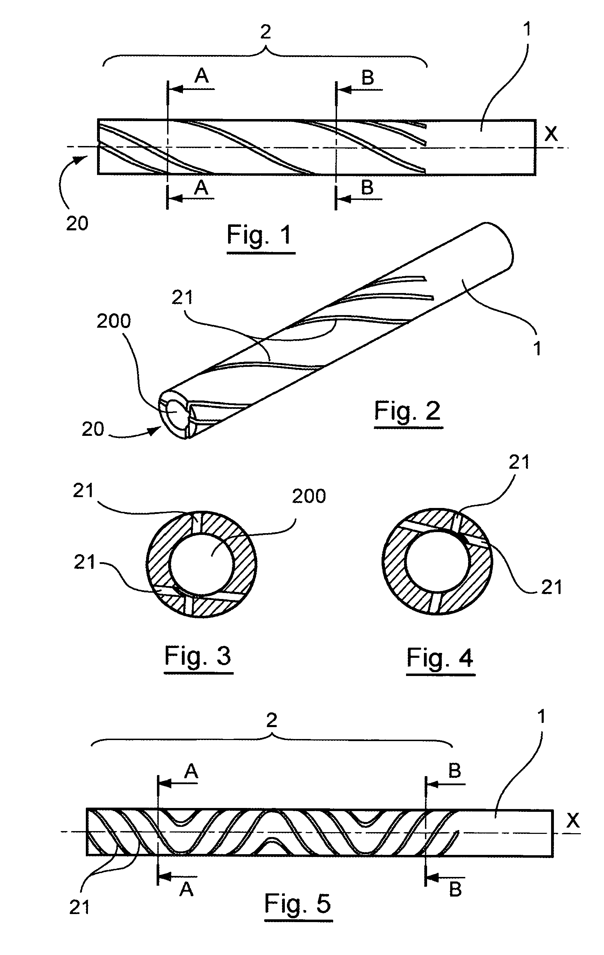

Les figures 1 à 8 présentent deux exemples de réalisation d'un instrument endodontique pour travailler un canal dans une racine de dent, présentant une fente longitudinale selon le principe de l'invention.

On entend par « travailler un canal dans une racine de dent » plusieurs situations distinctes possibles, à savoir notamment les actions consistant à aléser un canal, ou encore obturer un canal, c'est à dire l'action de remplir un canal par une pâte d'obturation.

Tel qu'illustré par les figures 1 à 8, un instrument endodontique comprend une base 1 pouvant constituer soit une extrémité de préhension destinée à être manipulée manuellement par un praticien, soit un organe d'assemblage pour monter l'instrument endodontique sur un embout d'un outil rotatif.

Un instrument endodontique selon l'invention est réalisé à partir d'une tige métallique, et plus précisément à partir d'une tige réalisée en alliage de nickel et de titane, usiné par une technique d'électro-érosion. Le fil d'électroérosion est déplacé selon une combinaison de déplacements longitudinaux et transversaux par rapport à l'axe longitudinal de l'instrument endodontique, de façon à générer des surfaces de découpe conduisant, à leur intersection, à l'apparition d'une arête de découpe s'étendant longitudinalement le long d'une portion de découpe 2 s'étendant entre deux extrémités dont l'une est définie par la base 1 de l'instrument et l'autre par l'extrémité distale 1, à l'opposé de la base.

Les figures 1 à 8 sont des vues de deux exemples de tiges métalliques constituant des ébauches d'instruments endodontiques.

Selon l'exemple illustré par les figures 1 à 4, l'ébauche est une tige creuse, de section circulaire. Cette ébauche présente en outre deux fentes 21 s'étendant longitudinalement, en l'occurrence de façon hélicoïdale, dans la portion de découpe (constituant la partie active de l'instrument). Une telle ébauche constitue la pièce sur laquelle les goujures et arêtes de découpe (une goujure étant délimitée par deux arêtes de découpe) sont réalisées.

Tel que cela apparaît sur la figure 3 (qui est une vue selon la coupe AA indiquée sur la figure 1) et sur la figure 4 (qui est une vue selon la coupe BB indiquée sur la figure 1), les fentes 21 s'étendent de façon décentrée par rapport à l'axe longitudinal X de l'instrument, constituant l'axe de rotation de la base 1 de l'instrument.

Les fentes ainsi réalisées constituent des passages de circulation pour un fluide, tel qu'un fluide d'irrigation. On note que, selon le présent mode de réalisation, l'instrument présente un évidement central 200 contribuant également à la circulation du fluide.

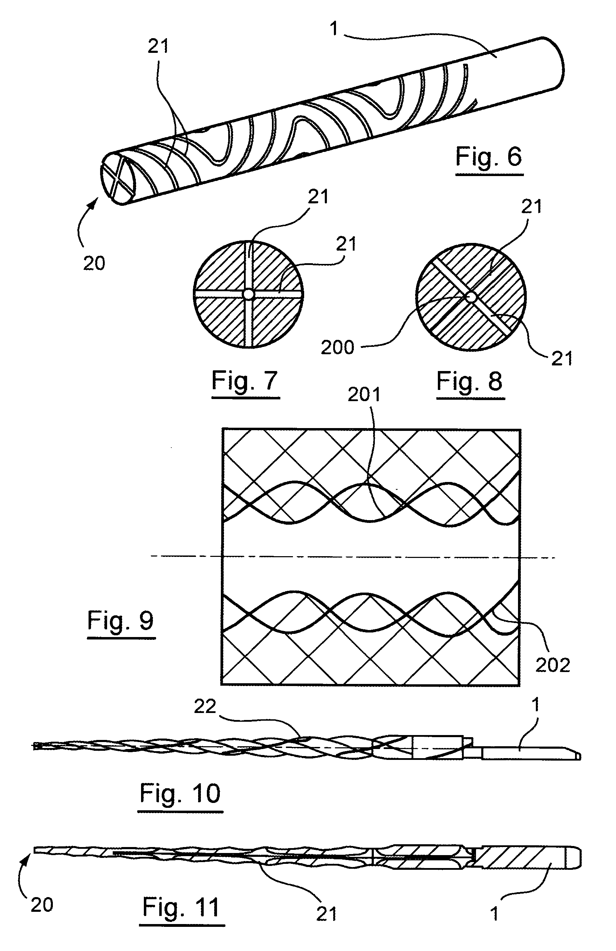

Selon le mode de réalisation illustré par les figures 5 à 8, l'ébauche est réalisée à partir d'une tige pleine et présente dans la portion de découpe 2 deux fentes 21 s'étendant longitudinalement. Tel que cela apparaît sur les figures 5 et 6, les fentes 21 présentent une forme sinusoïdale. En référence à la figure 7 (qui est une vue selon la coupe AA indiquée sur la figure 5) et à la figure 8 (qui est une vue selon la coupe BB indiquée sur la figure 5), les fentes s'étendent longitudinalement de façon centrée sur l'axe X de rotation de la base 1 de l'instrument, caractérisant ainsi un évidement 200 central (fig. 8).

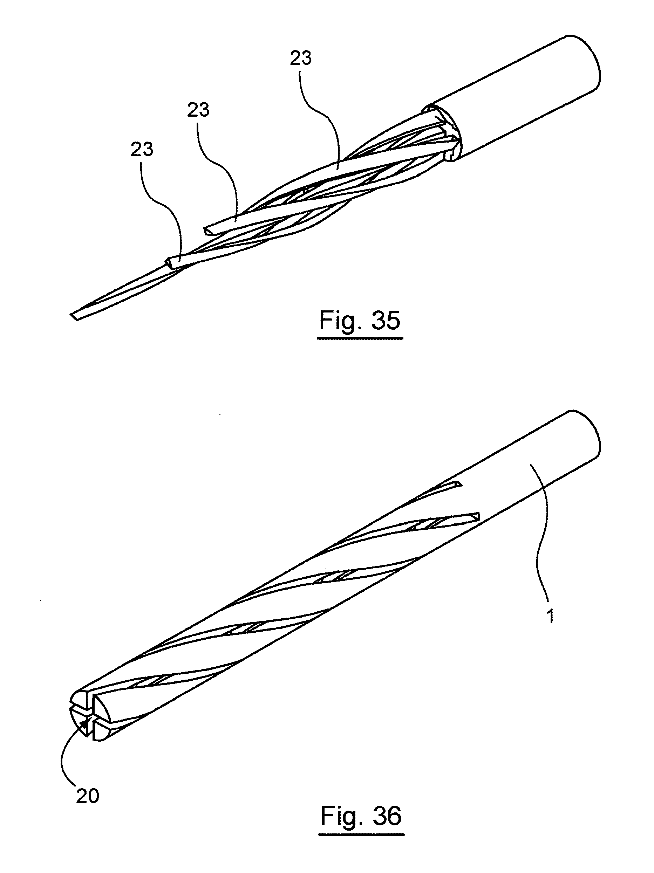

Il est à remarquer que la position de cet évidement 200 peut varier en fonction du centrage ou du décentrage du fil d'électroérosion par rapport à l'axe de rotation de la base 1 (figure 36).

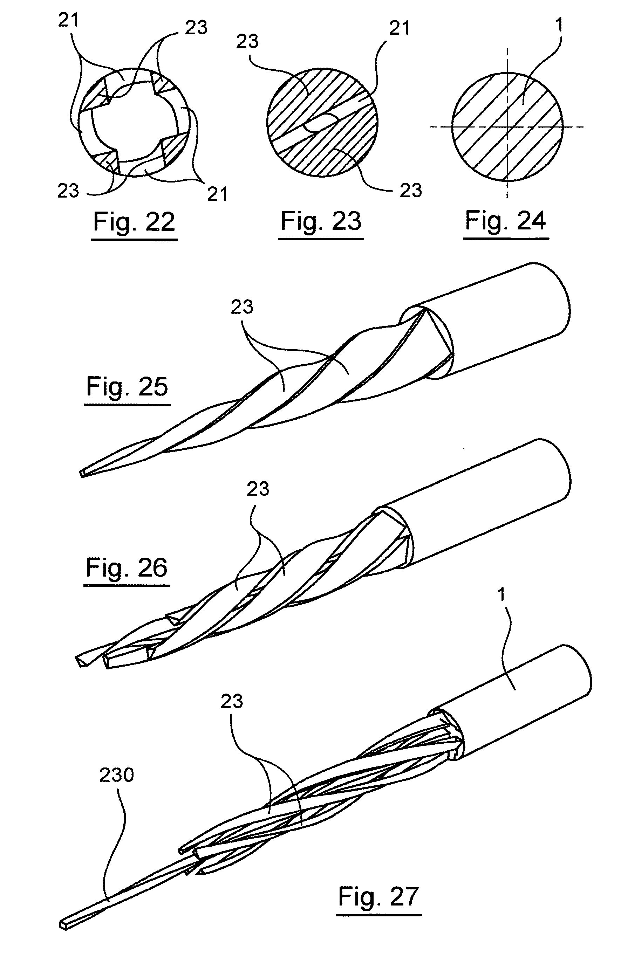

En fonction du nombre de fentes et de leurs localisations par rapport au centre ou à l'axe de rotation, deux configurations au moins sont possibles :
- avec évidement central (figure 36) :
   Fentes centrées ou décentrées de moins du rayon du fil d'électroérosion ;
- avec bras « pilote » (figure 27) :
   L'évidement dans ce cas peut être annulaire, avec au moins une fente décentrée de plus du rayon du fil d'électroérosion.

Dans cette configuration, trois fentes minimum doivent être appliquées. La figure 27 illustre quatre fentes décentrées de plus du rayon du fil d'électroérosion, laissant paraître un bras de guidage ou « pilote » 230, centré sur l'axe de rotation de la base et de longueur supérieure à celle des autres bras 23 externes (c'est-à-dire répartis autour du bras « pilote » 230).

Ce bras « pilote » de section polygonale peut être composé de lignes rectilignes et/ou courbes.

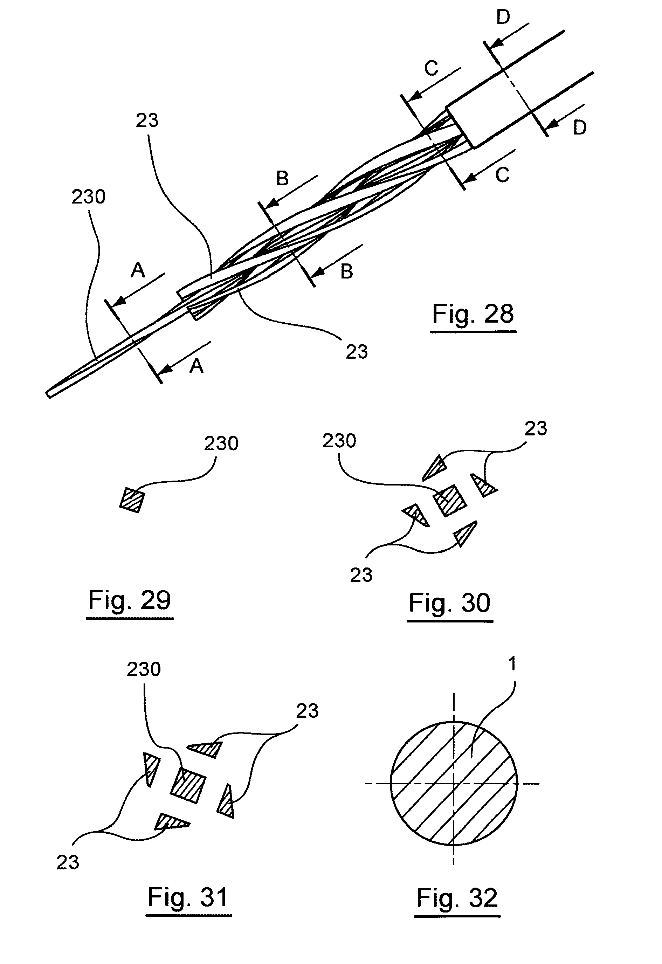

On décrit plus en détails ci-après le mode de réalisation illustré par la figure 27 à l'aide des figures 28 à 32 qui montrent l'instrument :
- de côté (figure 28) ;
- selon la coupe A-A indiqué sur la figure 28 (figure 29) ;
- selon la coupe B-B indiqué sur la figure 28 (figure 30) ;
- selon la coupe C-C indiqué sur la figure 28 (figure 31) ;
- selon la coupe D-D indiqué sur la figure 28 (figure 32).

Comme le montre ces figures, les sections du bras « pilote » 230 et du bras 23 externes peuvent être de forme quelconque et/ou évolutives (figures 29 à 31).

Selon le présent mode de réalisation par exemple, le bras « pilote » 230 présente une section carrée tandis que le bras 23 présente une section en forme de trapèze rectangle.

Par ailleurs, l'extrémité du bras « pilote » et des bras externes peut être aménagée d'une pointe coupante ou non.

D'autres configurations peuvent être envisagées avec une ou deux fentes, centrées ou non centrées.

Ce témoin peut être totalement, partiellement ou pas du tout hélicoïdal.

Dans une réalisation préférentielle, l'extrémité distale du témoin est non hélicoïdale, conique et arrondie à la pointe et sur les arêtes, pour dégager une partie non travaillante sur une hauteur de 3 mm par exemple, servant ainsi de « pilote » à l'instrument endodontique.

Comme déjà mentionné, les bras 23 élastiques (ou externes) peuvent avoir des longueurs différentes de celles du bras « pilote » 230 et également entre eux (figure 35).

A titre indicatif, on a représenté sur la figure 9 les formes intérieures résultant de la mise en rotation de l'instrument (sans déplacement axial), la forme 201 étant celle pour un sens de rotation de l'outil et la forme 202 étant celle pour le sens de rotation inverse.

Dans les deux modes de réalisation qui viennent d'être décrits, les fentes 21 présentent :
- une ouverture radiale (les fentes 21 communiquant avec l'évidement central de l'instrument dans le cas de l'instrument illustré par les figures 1 à 4, et les fentes étant diamétrales dans le cas de l'exemple illustré par les figures 5 à 8);
- une ouverture axiale, les fentes 21 s'étendant jusqu'à déboucher au niveau de l'extrémité distale 20 de l'instrument.

Il est toutefois envisageable que la ou les fentes soient réalisées dans une tige pleine en s'étendant selon une profondeur inférieure au diamètre de la portion de découpe. Il est en outre envisageable que la ou les fentes 21 ne s'étendent que sur une partie seulement de la longueur de la portion de découpe, la ou les fentes ne présentant alors pas d'ouverture axiale.

De façon générale, le principe de l'invention peut être appliqué à des ébauches de toutes formes, parmi lesquelles les formes coniques, pyramidales, cylindriques, polygonales, hélicoïdales...

De plus, les fentes pratiquées peuvent présenter différentes formes autres que celles qui viennent d'être mentionnées (hélicoïdales et sinusoïdales), telles que :
- rectilignes ;
- obliques ;
- courbes ;
- gauche, notamment en L, en S, en T, en U, en V, en W, en Y ou en Z.

En outre, les fentes peuvent présenter de multiples combinaisons et/ou déclinaisons, parmi lesquelles :
- le nombre de fentes peut varier classiquement de 1 à 6 pour une section donnée, voire plus de 6, notamment pour un instrument de gros diamètre ;
- la ou les fentes pratiquées peuvent avoir une largeur constante, variable ou progressive ;
- les fentes peuvent être identiques ou différentes ;
- les fentes sont traversantes (diamétralement avec une tige pleine voire radialement avec une tige creuse), sur tout ou partie de la longueur de la portion de découpe ;
- les fentes peuvent être bordées par des surfaces agrémentées de reliefs tels que des stries, des picots, des encoches, des bosses, de toutes dimensions et implantations envisageables ;
- les fentes peuvent être bordées par des surfaces ayant subi un traitement spécifique, telle que l'adjonction de matériaux, un traitement chimique, une coloration...
- Au moins une fente donnée peut éventuellement être tout ou partie discontinue (avec au moins une partie pleine sur une longueur, une largeur, et une épaisseur plus ou moins importantes de la fente, la partie pleine étant de forme quelconque, régulière ou irrégulière). Ce type de réalisation peut permettre, par exemple, de réguler de manière contrôlée, et donc de faciliter, réduire, bloquer, ou orienter, un flux de fluide en tous points de la fente ;

Par ailleurs, l'invention peut être appliquée sur des instruments présentant des caractéristiques de formes et/ou dimensionnelles variées présentant des caractéristiques appartenant notamment au groupe suivant :
- l'instrument est élaboré à partir d'une ébauche sous la forme d'une tige pleine ou d'un tube, rectiligne ou torsadée (ou de forme quelconque) ;
- dans le cas d'une ébauche usinée extérieurement, le nombre de goujures sur une section donnée est compris classiquement entre 1 et 6 (mais peut dépasser 6, notamment pour un instrument de gros diamètre) ;
- l'instrument endodontique peut présenter une conicité classique comprise entre 0 et 15 %, pouvant aller jusqu'à 30%, voire plus ;
- le diamètre de l'instrument est classiquement compris entre 0,06 mm et 1,2 mm, mais peut atteindre 4 mm dans le cas d'un usage vétérinaire par exemple, voire être inférieur à 0,06 mm à la pointe ;
- l'instrument présente une longueur classiquement comprise entre 15 et 30 mm, mais peut plus généralement varier entre 5 mm et 200 mm ;
- l'instrument est destiné à un usage manuel ou mécanisé, et peut présenter un moyen d'emmanchage ;
- l'instrument peut être destiné à un usage rotatif continu, rotatif alterné, à un mode vibratoire, voire à une combinaison de ces usages ;
- l'instrument peut être métallique (nickel-titane ou autres alliages éventuels, en acier inoxydable, en carbure, ou tous autres métaux éventuels...), voire en plastique.

La conception de l'instrument peut être adaptée en fonction de la destination de l'instrument : instrument d'alésage, de cathétérisme, d'irrigation, ou encore les compacteurs, les extracteurs, les trépans....

En référence aux figures 10 à 17, on décrit ci-après un autre instrument endodontique selon l'invention.

Selon le principe de l'invention, l'instrument présente une base 1 à partir de laquelle s'étend une partie active constituée par une portion de découpe composée de goujures 22 délimitées chacune par deux arêtes de découpe 220. Les goujures 22 ont ici une forme d'hélice.

Tel que cela apparaît sur la figure 11, on note que la fente 21 s'étend sur une partie seulement de la longueur de la portion de découpe, et ne débouche donc pas au niveau de l'extrémité distale 20 de l'instrument.

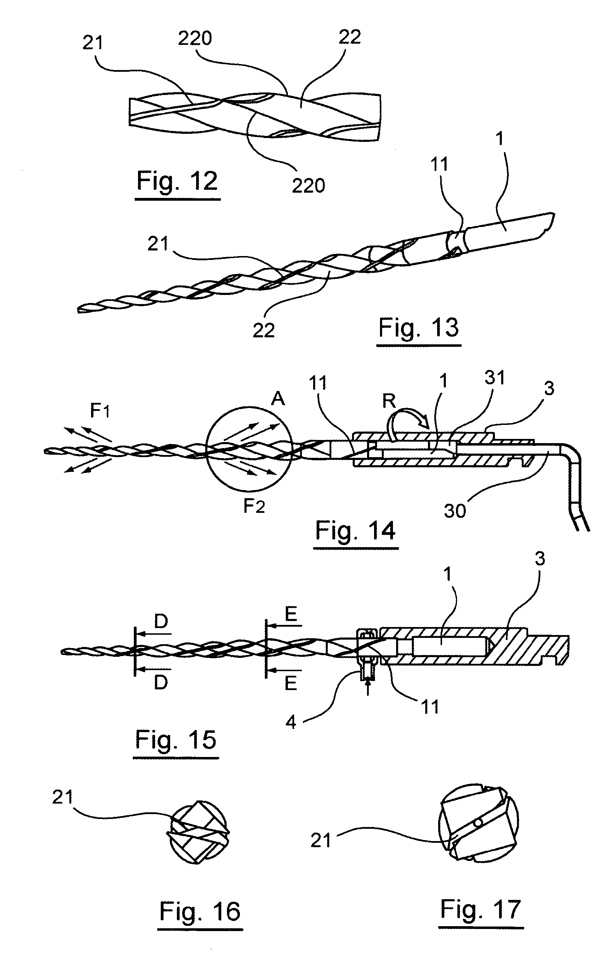

Selon le présent mode de réalisation, la fente 21 s'étend selon une trajectoire hélicoïdale, de façon traversante par rapport à la section de l'outil comme le font apparaître la figure 16 (qui est une vue selon la coupe DD indiquée sur la figure 15) et la figure 17 (qui est une vue selon la coupe EE sur la figure 15).

De plus, tel que cela apparaît plus clairement sur la vue de détails procurée par la figure 12, l'hélice des goujures 22 et l'hélice de la fente 21 présentent des orientations inverses (gauche et droite). A titre indicatif, l'hélice des goujures est ici orientée à droite tandis que l'hélice de la fente est montée à gauche.

Cette conception en sens opposé des hélices des goujures et de la fente permet de conjuguer efficacement l'entrée d'un fluide d'irrigation par l'intérieur de l'instrument et l'évacuation des débris dentinaires par l'extérieur de l'instrument.

Ceci est illustré par la figure 14 qui montre un instrument endodontique dont les goujures s'étendent de façon hélicoïdale avec un pas à droite tandis que la fente 21 s'étend de façon hélicoïdale avec un pas à gauche. Lorsque cet instrument est entraîné en rotation dans le sens horaire tel qu'indiqué par la flèche R, la partie active de l'instrument tend à pousser le fluide vers le fond du canal tel qu'indiqué par les flèches F1, et à évacuer les débris dentinaires par l'extérieur de l'instrument tel qu'indiqué par les flèches F2.

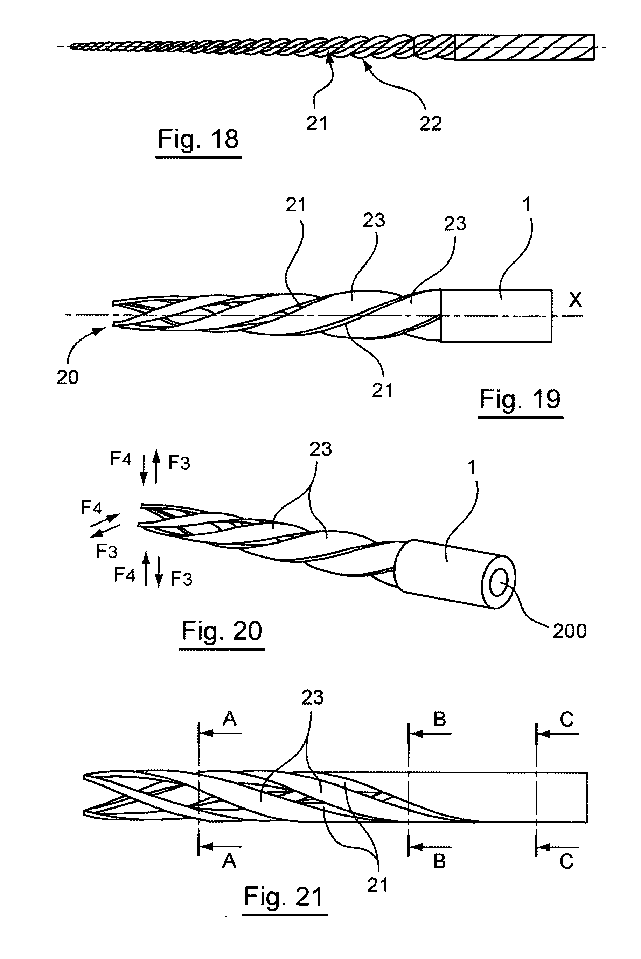

Selon une variante envisageable illustrée par la figure 18, il est possible de réaliser la portion de découpe de telle sorte que l'hélice de la fente 21 et l'hélice des goujures 22 soient réalisées dans le même sens (le pas à droite dans les deux cas ou le pas à gauche dans les deux cas). Une telle configuration engendre une plus forte poussée du fluide car les deux dynamiques, interne et externe, se conjuguent de manière synergétique.

Selon encore une autre variante, l'hélice de la fente longitudinale peut avoir alternativement un pas à droite et un pas à gauche le long de l'instrument, entraînant ainsi des mouvements simultanés respectifs de contraction et de dilatation radiales de l'instrument en rotation à l'intérieur du canal. Une telle conception permet d'influer sur la dynamique du fluide, en fonction des paramètres spécifiques de l'instrument, du fluide et de la rotation de l'instrument, conduisant à engendrer un déplacement du fluide dans un sens et avec un débit contrôlé, constant ou non, continu ou non. Une telle géométrie peut également être employée avec des instruments dont la mobilité est autre que rotative continue, tel qu'avec les instruments manuels, rotatifs alternatifs, vibrants...

Concernant les goujures, on note que celles-ci peuvent être partiellement ou totalement en hélice, continues ou alternées. En général, si le sens de la rotation de l'instrument est en sens horaire, on réalise les goujures de telle sorte que le sens de l'hélice des goujures soit à droite pour les instruments d'alésage et à gauche pour les instruments de compactage. Le pas de l'hélice des goujures peut quant à lui être constant, variable ou progressif.

Par ailleurs, les goujures et/ou les arêtes de découpe peuvent être agrémentées de reliefs.

Selon une autre caractéristique avantageuse, l'instrument peut être réalisé de telle sorte que sa base 1 présente au moins une fente 11 communiquant avec la ou les fentes 21 de la partie active de l'instrument constituée en l'occurrence par la portion de découpe 2.

Ainsi, la ou les fentes aménagées sur la base 1 de l'outil peut permettre de connecter le système d'irrigation de l'instrument constitué par la ou les fentes 21, avec un dispositif externe.

Tel que cela est illustré par la figure 14, un tel dispositif externe peut être un manche mécanisé couplé à un conduit 30 d'amenée d'un fluide, ce conduit 30 s'étendant, selon le présent mode de réalisation, axialement par rapport à l'axe du manche mécanisé et communiquant avec une chambre 31 du manche mécanisé, elle-même en communication avec la fente 11 de la base de l'instrument.

Selon le mode de réalisation illustré par la figure 15, la base de l'instrument est accouplée avec un manche mécanisé 3, et un dispositif 4 d'amenée de fluide est rapporté sur la partie de la base 1 s'étendant à l'extérieur du manche 3. Ce dispositif 4 est prévu pour amener radialement le fluide d'irrigation dans la fente 11 de la base 1 de l'instrument.

Selon un mode de réalisation particulier illustré par les figures 19 à 26, deux fentes 21 sont réalisées et la partie active de l'instrument présente quatre bras 23. Selon un autre mode de réalisation particulier, non illustré, deux fentes 21 sont réalisées et la partie active de l'instrument présente trois bras 23.

La disposition des fentes entre elles influe sur la quantité de bras générés.

Tel que cela apparaît, les fentes 21 s'étendent à partir de la base 1 en présentant une largeur croissante en allant vers l'extrémité distale de l'instrument. Ceci est illustré par la figure 22 (qui est une vue selon la coupe AA indiquée sur la figure 21) et par la figure 23 (qui est une vue selon la coupe BB indiquée sur la figure 21), qui montrent une largeur de fente 21 notablement supérieure sur la figure 22 par rapport à la largeur de la fente 21 apparaissant sur la figure 23 (la figure 24 étant une vue selon la coupe CC indiquée sur la figure 21, c'est-à-dire au niveau de la base 1 de l'instrument).

Les fentes 21 de l'instrument s'étendent longitudinalement selon une trajectoire hélicoïdale.

Les bras 23 prennent la forme de rubans s'étendant de façon hélicoïdale autour de l'axe de rotation X de l'instrument, et sont ainsi portés par une âme porteuse s'étendant selon une trajectoire hélicoïdale (l'âme porteuse étant la ligne reliant les points centraux de toutes les sections transversales d'un bras). Le nombre de bras peut varier. Ils peuvent être de largeur constante, variable ou progressive, plus ou moins épais, plus ou moins larges, plus ou moins longs, ceci en fonction des besoins afin d'adapter l'instrument à la morphologie des canaux dentinaires, en particulier les canaux de forme conique.

Un tel instrument, avec ses bras portés par une âme porteuse s'étendant de façon hélicoïdale, est susceptible de variations volumétriques.

En effet, dans le cas d'un instrument présentant des bras dont l'âme porteuse s'étend selon une trajectoire hélicoïdale avec un pas à gauche tel qu'illustré par la figure 20, une rotation dans le sens horaire de l'instrument va tendre à engendrer une expansion des bras lors d'un couple résistant tel qu'illustré par les flèches F3, tandis qu'une rotation dans le sens anti-horaire de l'instrument va tendre à engendrer une rétractation des bras lors d'un couple résistant tel qu'illustré par les flèches F4, tendant à amener la partie active de l'instrument dans une configuration telle que celle illustrée par la figure 25 dans laquelle les bras sont accolés les uns aux autres.

De plus, les bras 23 en hélice peuvent être plus ou moins longs, et notamment de longueur différente tel qu'illustré par la figure 26, ceci pour adapter la forme de la partie active à la conicité du canal.

Tel que cela apparaît sur la figure 20, les bras 23 délimitent un évidement axial qui se prolonge et communique avec l'évidement axial 200 ménagé dans la base 1, ceci pour permettre et faciliter la circulation d'un fluide d'irrigation à l'intérieur de l'instrument.

Par ailleurs, ces extrémités libres des bras peuvent être identiques ou différentes entre elles. Elles peuvent par exemple être de forme ogivale, plate, arrondie, biaisée, conique, pyramidale...

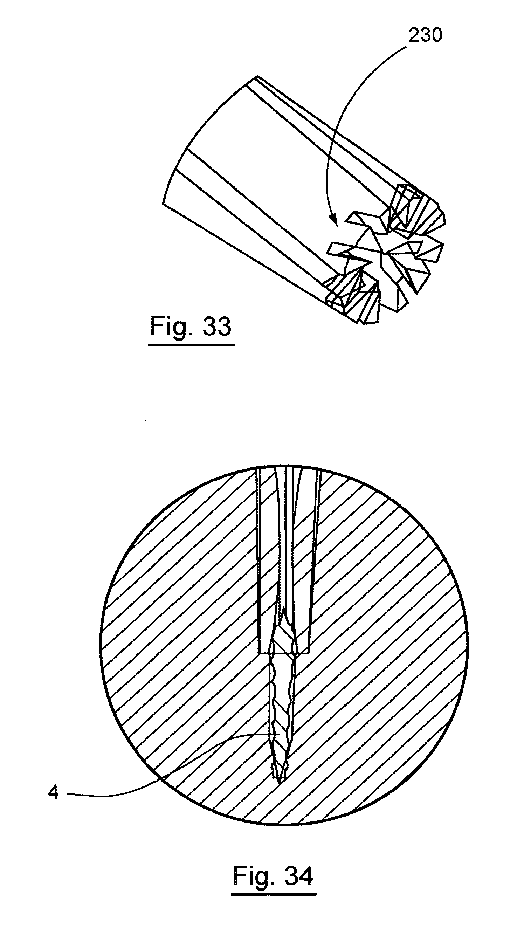

Elles peuvent par ailleurs prendre la forme d'une extrémité dentelée 230 tel qu'illustré par la figure 33, les bras s'achevant ainsi sous forme de griffes. Les dents composant l'extrémité dentelée 230 peuvent présenter une section triangulaire dont une pointe est dirigée vers l'évidement axial de l'instrument.

Ainsi, il est possible d'utiliser un tel instrument pour enserrer un élément indésirable 4 (figure 34), tel qu'un instrument fracturé dans un canal radiculaire.

En effet, tel qu'indiqué précédemment, la rotation de l'instrument peut permettre une expansion radiale dans un sens et une rétractation radiale dans l'autre sens. Il est donc possible d'introduire l'instrument dans le canal radiculaire dans le sens d'une expansion radiale jusqu'à atteindre le fragment à extraire, puis l'instrument sera retiré en rotation dans le sens opposé, pour permettre sa rétractation sur le fragment 4 et donc son enserrement et son pincement.

De manière similaire, il est également envisageable d'utiliser un tel instrument pour réaliser un prélèvement de tissu (biopsie).

## Revendications

1. Instrument endodontique utilisé pour travailler un canal dans une dent, présentant une base (1) à partir de laquelle s'étend longitudinalement une partie active (2) de travail du canal,
**caractérisé en ce que** ladite partie active (2) présente au moins une fente (21) traversante par rapport à la section de l'instrument, s'étendant longitudinalement, formant passage de fluide.

2. Instrument endodontique selon la revendication 1, **caractérisé en ce qu'**au moins une goujure (22) s'étend de la base (1) entre deux arêtes de découpe (220), ladite au moins une goujure s'étendant longitudinalement le long de la partie active (2).

3. Instrument endodontique selon l'une des revendications 1 et 2, **caractérisé en ce que** ladite fente (21) est hélicoïdale.

4. Instrument endodontique selon l'une des revendication 1 et 2, **caractérisé en ce que** ladite fente (21) présente une forme appartenant au groupe suivant :
- sinusoïdale ;
- rectiligne ;
- oblique ;
- courbe ;
- gauche, notamment en L, en S, en T, en U, en V, en W, en Y, en Z.

5. Instrument endodontique selon l'une quelconque des revendications 1 à 4, **caractérisé en ce que** ladite fente (21) présente une ouverture axiale.

6. Instrument endodontique selon l'une quelconque des revendications 1 à 5, **caractérisé en ce que** la base (1) présente un axe de rotation, et **en ce que** ladite fente (21) s'étend longitudinalement de façon centrée sur ledit axe de rotation.

7. Instrument endodontique selon l'une quelconque des revendications 1 à 6, **caractérisé en ce que** la base (1) présente un axe de rotation, et **en ce que** ladite fente (21) s'étend longitudinalement de façon décentrée par rapport audit axe de rotation.

8. Instrument endodontique selon l'une quelconque des revendications 1 à 7, **caractérisé en ce que** ladite base (1) présente également au moins une fente (11) communiquant avec la fente (21) de la partie active.

9. Instrument endodontique selon l'une quelconque des revendications 1 à 8, **caractérisé en ce que** ladite partie active (2) présente une pluralité de fentes (21) s'étendant longitudinalement, ladite partie active (2) présentant une pluralité de bras (23) délimitant entre eux ladite pluralité de fentes.

10. Instrument endodontique selon la revendication 10, **caractérisé en ce que** lesdits bras (23) sont chacun portés par une âme porteuse s'étendant selon une trajectoire au moins partiellement hélicoïdale.

11. Instrument endodontique selon l'une des revendications 9 et 10, **caractérisé en ce que** lesdits bras (23) délimitent un évidement axial.

12. Instrument endodontique selon la revendication 11, **caractérisé en ce que** ledit évidement axial délimité par lesdits bras (23) communique avec un évidement axial (200) ménagé dans ladite base (1).

13. Instrument endodontique selon l'une quelconque des revendications 9 à 12, **caractérisé en ce que** lesdits bras (23) présentent des longueurs différentes.

14. Instrument endodontique selon la revendication 13, **caractérisé en ce que** l'un desdits bras (230) est un bras central de longueur supérieure à celle des autres bras (23).

15. Instrument endodontique selon l'une quelconque des revendications 9 à 14, **caractérisé en ce que** lesdits bras (23) présentent chacun une extrémité dentelée.

## Patentansprüche

1. Endodontisches Instrument, das verwendet wird, um einen Kanal in einem Zahn anzubringen, umfassend eine Basis (1) von der sich in der Längsrichtung ein aktiver Teil (2) der Anbringung des Kanals erstreckt, **dadurch gekennzeichnet, dass** der aktive Teil (2) mindestens einen quer liegenden Spalt (21) mit Bezug auf den Schnitt des Instruments aufweist, der sich in der Längsrichtung erstreckt und einen Flüssigkeitsdurchgang bildet.

2. Endodontisches Instrument nach Anspruch 1, **dadurch gekennzeichnet, dass** sich mindestens eine Nut (22) von der Basis (1) zwischen zwei Schneidekanten (220) erstreckt, wobei sich die mindestens eine Nut in der Längsrichtung entlang dem aktiven Teil (2) erstreckt.

3. Endodontisches Instrument nach einem der Ansprüche 1 und 2, **dadurch gekennzeichnet, dass** der Spalt (21) schraubenförmig ist.

4. Endodontisches Instrument nach einem der Ansprüche 1 und 2, **dadurch gekennzeichnet, dass** der Spalt (21) eine Form aufweist, die zur folgenden Gruppe gehört:
- sinusförmig;
- geradlinig,
- schräg;
- gekrümmt;
- linksdrehend, entweder an L, an S, an T, an U, an V, an W, an Y, an Z.

5. Endodontisches Instrument nach einem der Ansprüche 1 und 4, **dadurch gekennzeichnet, dass** der Spalt (21) eine axiale Öffnung aufweist.

6. Endodontisches Instrument nach einem der Ansprüche 1 bis 5, **dadurch gekennzeichnet** die Basis (1) eine Drehachse aufweist, und dass sich der Spalt (21) in der Längsrichtung auf zentrierte Weise auf der Drehachse erstreckt.

7. Endodontisches Verfahren nach einem der Ansprüche 1 bis 6, **dadurch gekennzeichnet** die Basis (1) eine Drehachse aufweist, und dass sich der Spalt (21) in der Längsrichtung auf dezentrierte Weise auf der Drehachse erstreckt.

8. Endodontisches Instrument nach einem der Ansprüche 1 bis 7, **dadurch gekennzeichnet, dass** die Basis (1) auch mindestens einen Spalt (11) aufweist, der mit dem Spalt (21) des aktiven Teils kommuniziert.

9. Endodontisches Instrument nach einem der Ansprüche 1 bis 8, **dadurch gekennzeichnet, dass** der aktive Teil (2) eine Vielzahl von Spalten (21) aufweist, die sich in der Längsrichtung erstrecken, wobei der aktive Teil (2) eine Vielzahl von Armen (23) aufweist, die unter sich die Vielzahl von Spalten begrenzen.

10. Endodontisches Instrument nach Anspruch 10, **dadurch gekennzeichnet, dass** die Arme (23) jeweils von einem tragenden Kern getragen werden, der sich entlang einer Bahn erstreckt, die mindestens teilweise schraubenförmig ist.

11. Endodontisches Instrument nach einem der Ansprüche 9 und 10, **dadurch gekennzeichnet, dass** die Arme (23) eine axiale Aussparung begrenzen.

12. Endodontisches Instrument nach Anspruch 11, **dadurch gekennzeichnet, dass** die axiale Aussparung, die von den Armen (23) begrenzt ist, mit einer axialen Aussparung (200) kommuniziert, die in der Basis (1) angeordnet ist.

13. Endodontisches Instrument nach einem der Ansprüche 9 bis 12, **dadurch gekennzeichnet, dass** die Arme (23) verschiedene Längen aufweisen.

14. Endodontisches Instrument nach Anspruch 13, **dadurch gekennzeichnet, dass** einer der Arme (230) ein zentraler Arm mit einer Länge ist, die größer als diejenige der andere Arme (23) ist.

15. Endodontisches Instrument nach einem der Ansprüche 9 bis 14, **dadurch gekennzeichnet, dass** die Arme (23) jeweils ein gezacktes Ende aufweisen.

## Claims

1. Endodontic instrument used for working a tooth canal, having a base (1) from which a cutting part (2) for working the canal extends longitudinally, **characterised in that** said cutting part (2) has at least one through slot (21) in relation to the cross-section of the instrument, extending longitudinally, acting as a fluid passage.

2. Endodontic instrument according to claim 1, **characterised in that** at least one groove (22) extends from the base (1) between two cutting edges (220), said at least one groove extending longitudinally along the cutting part (2).

3. Endodontic instrument according to any of claims 1 and 2, **characterised in that** said slot (21) is helical.

4. Endodontic instrument according to any of claims 1 and 2, **characterised in that** said slot (21) has a shape belonging to the following group:
- sinusoidal;
- rectilinear;
- oblique;
- curved;
- skewed, particularly in the form of an L, S, T, U, V, W, Y, Z.

5. Endodontic instrument according to any of claims 1 to 4, **characterised in that** said slot (21) has an axial opening.

6. Endodontic instrument according to any of claims 1 to 5, **characterised in that** the base (1) has an axis of rotation, and **in that** said slot (21) extends longitudinally in a centred fashion along said axis of rotation.

7. Endodontic instrument according to any of claims 1 to 6, **characterised in that** the base (1) has an axis of rotation, and **in that** said slot (21) extends longitudinally in an offset fashion along said axis of rotation.

8. Endodontic instrument according to any of claims 1 to 7, **characterised in that** said base (1) also has at least one slot (11) connected to the slot (21) of the cutting part.

9. Endodontic instrument according to any of claims 1 to 8, **characterised in that** said cutting part (2) has a plurality of slots (21) extending longitudinally, said cutting part (2) having a plurality of arms (23) mutually defining said plurality of slots.

10. Endodontic instrument according to claim 10, **characterised in that** said arms (23) are each supported by a carrying core extending along an at least partially helical trajectory.

11. Endodontic instrument according to any of claims 9 and 10, **characterised in that** said arms (23) define an axial recess.

12. Endodontic instrument according to claim 11, **characterised in that** said axial recess defined by said arms (23) is connected to an axial recess (200) formed in said base (1).

13. Endodontic instrument according to any of claims 9 to 12, **characterised in that** said arms (23) have different lengths.

14. Endodontic instrument according to claim 13, **characterised in that** one of said arms (230) is a central arm having a greater length than that of the other arms (23).

15. Endodontic instrument according to any of claims 9 to 14, **characterised in that** said arms (23) each have a serrated end.
